# EUROPÄISCHE PATENTSCHRIFT

(11) **EP 2 656 083 B1**
(45) Veröffentlichungstag und Bekanntmachung des Hinweises auf die Patenterteilung: **02.09.2015**
(21) Anmeldenummer: 11804580.6
(22) Anmeldetag: 23.12.2011
(51) Int. Cl.: G01N 35/00, B01L 9/00

(54) **PIPETTIERVORRICHTUNG MIT LINEARMOTOR**
PIPETTING DEVICE HAVING A LINEAR MOTOR
DISPOSITIF DE PIPETAGE À MOTEUR LINÉAIRE

(30) Priorität: 23.12.2010 DE 102010064049
(43) Veröffentlichungstag der Anmeldung: 30.10.2013
(73) Patentinhaber: Hamilton Bonaduz AG, 7402 Bonaduz (CH)
(72) Erfinder: SCHLEGEL, Andreas, CH-7304 Maienfeld (CH); ROMER, Hanspeter, CH-8340 Hinwil (CH)
(74) Vertreter: RLTG
(86) Internationale Anmeldenummer: PCT/EP2011/073961
(87) Internationale Veröffentlichungsnummer: WO 2012/085274

(56) Entgegenhaltungen:
- WO-A1-2005/031316
- DE-A1-102005 049 920

## Beschreibung

Die vorliegende Erfindung betrifft eine Pipettiervorrichtung mit wenigstens zwei sich längs einer Kanalachse erstreckenden Pipettierkänalen, von welchen jeder längs der Kanalachse verstellbar ist, wobei die Pipettiervorrichtung einen Verlagerungsantrieb mit einem Linearmotor aufweist, mit welchem ein Pipettierkanal unabhängig von einer Verstellung längs der Kanalachse längs einer zur Kanalachse orthogonalen Verlagerungsachse verlagerbar ist.

Derartige Pipettiervorrichtungen sind aus der DE 10 2005 049 920 A1 bekannt.

Der Stator der bekannten Pipettiervorrichtung weist lediglich eine Magnetanordnung auf, mit welcher mehrere Läufer zusammenwirken, von denen wiederum jeder mit einer Mehrzahl von Pipettierkanälen gekoppelt ist. Die Pipettierkanäle innerhalb einer einem gemeinsamen Läufer zugeordneten Gruppe sind in längs der Verlagerungsachse nur gemeinsam bewegbar und sind in einer Bewegungsrichtung orthogonal zur Verlagerungsachse und zu den parallelen Kanalachsen relativ zueinander durch Spindeltriebe bewegbar.

Nachteilig an der bekannten Pipettiervorrichtung ist, dass die Pipettierkanäle bzw. Pipettierkanäle alle der selben Magnetanordnung zugeordnet sind und daher sich gegenseitig in ihrer Bewegbarkeit, insbesondere in ihrer Annäherbarkeit aneinander, beschränken.

Es ist Aufgabe der vorliegenden Erfindung, den Verlagerungsantrieb unter Verwendung eines Linearantriebs der eingangs genannten Pipettiervorrichtung zu verbessern.

Dies wird gemäß der vorliegenden Erfindung durch eine Pipettiervorrichtung mit allen Merkmalen des Anspruchs 1 erreicht.

Ein Linearmotor umfasst üblicherweise einen Stator und einen Läufer, wobei es sich dann anbietet, den üblicherweise massereicheren Stator an einem Gestell der Pipettiervorrichtung ortsfest vorzusehen, während der Läufer des Linearmotors zur gemeinsamen Bewegung mit dem Pipettierkanal gekoppelt ist.

Grundsätzlich ist es dabei gleichgültig, ob die Leiterschleifenanordnung den Läufer oder den Stator bildet bzw. ob die Magnetanordnung den Stator oder den Läufer bildet.

Da sich der Stator über den gesamten Verlagerungsweg längs der Verlagerungsachse erstreckt, ist erfindungsgemäß vorgesehen, dass der Stator die tendentiell pro Längeneinheit massereichere Magnetanordnung aufweist und der Läufer die Leiterschleifenanordnung aufweist. Die Leiterschleifenanordnung kann kurz und somit kostengünstig ausgeführt werden.

Außerdem ist es bei der vorgeschlagenen Anordnung in äußerst vorteilhafter Weise möglich, mehrere Pipettierkanäle mit jeweils gesonderten Leiterschleifenanordnungen an ein und derselben Magnetanordnung zu bewegen. Dies wäre bei einer Ausstattung des Stators mit der Leiterschleifenanordnung nur unter größtem Aufwand möglich, da stets alle Leiterschleifen von Strom durchflossen sind und somit alle einem gemeinsamen Stator zugeordneten Pipettierkanäle mit ihren Läufern auf eine Bestromung der Leiterschleifenanordnung ansprechen würden.

Grundsätzlich kann daran gedacht sein, die Magnetanordnung vollständig oder teilweise mit Elektromagneten auszustatten. Dies ist allerdings sehr aufwendig und teuer. Aus Kostengründen ist daher bevorzugt, wenn die Magnetanordnung Permanentmagnete umfasst, vorzugsweise ausschließlich Permanentmagnete umfasst.

Für ein Funktionieren eines Linearmotors ist es erforderlich, dass sich die Leiterschleifenanordnung im Magnetfeld der Magnetanordnung befindet. Dabei kann es jedoch für eine erwünschte Verringerung der Anzahl an zur Realisierung des Linearantriebs notwendigen Bauteilen ausreichen, dass eine Magnetanordnung nur auf einer Seite einer Leiterschleifenanordnung vorgesehen ist. Dies bedeutet, dass eine Seite der Leiterschleifenanordnung einer Magnetanordnung gegenüberliegt, während die entgegengesetzte Seite der Leiterschleifenanordnung keiner Magnetanordnung gegenüberliegt.

In diesem Falle ist es bevorzugt, wenn die Magnetanordnung, insbesondere dann, wenn sie Permanentmagnete umfasst, auf einem ferromagnetischen Träger vorgesehen ist. Vorzugsweise befinden sich die Magnete der Magnetanordnung zwischen dem ferromagnetischen Träger und der Leiterschleifenanordnung. Ein derartiger ferromagnetischer Träger sorgt für einen vorteilhaften magnetischen Rückschluss auf der von der Leiterschleifenanordnung abgewandten Seite der Magnetanordnung und dient der Verstärkung der Wirkung des von der Magnetanodnung zu der Leiterschleifenanordnung hin ausgehenden Magnetfeldes.

Ebenso ist es möglich, dass der Stator zwei zueinander im Wesentlichen parallele Magnetanordnungen aufweist, zwischen welchen ein Spalt gebildet ist, in dem eine Leiterschleifenanordnung längs der Verlagerungsachse beweglich aufgenommen ist, wobei sich vorzugsweise ungleichnamige Pole von Magneten über den Spalt hinweg gegenüberliegen. Dann erstrecken sich die zwischen den parallelen Magnetanordnungen verlaufenden Magnetfeldlinien durch den zwischen den Magnetanordnungen gebildeten Spalt, in welchem die Leiterschleifenanordnung aufgenommen ist. Somit wird ein sehr effektives Magnetfeld zur Erzeugung eines elektromagnetischen Vortriebs an der Leiterschleifenanordnung bereitgestellt. Allerdings ist zu beachten, dass die zuletzt genannte Ausführungsform aufgrund der vorzusehenden zweiten Magnetanordnung teuerer ist als die zuvor genannte Ausführungsform mit einer Magnetanordnung auf lediglich einer Seite der Leiterschleifenanordnung. Bei der zuletzt genannten Ausführungsform mit zwei parallelen, einem Spalt zwischen sich bildenden Magnetanordnungen ist auf jeder von zwei gegenüberliegenden, zur Wicklungsachse der Leiterschleifen orthogonalen Seiten der Leiterschleifenanordnung eine Magnetanordnung vorgesehen.

Die oben beschriebenen Ausführungsformen eines längs der Verlagerungsachse linearmotorisch angetriebenen Pipettierkanals ermöglichen aufgrund der hervorragenden Eigenschaften des so gebildeten Linearmotors eine spielfreie Verstellbarkeit des Pipettierkanals längs der Verlagerungsachse. Insbesondere bieten diese Ausführungsformen die Möglichkeit zur spielfreien Bewegungsrichtungsumkehr längs der Verlagerungsachse, was nicht nur eine Verbesserung zu den bisher benutzten mechanischen Verlagerungsantrieben von Pipettierkanälen bedeutet, sondern was darüber hinaus die Möglichkeit eröffnet, unerwünschterweise nach einem Pipettieren außen an einer mit dem Pipettierkanal gekoppelten Pipettierspitze anhaftende Flüssigkeit durch einen Betrieb des Verlagerungsantriebs mit einer Mehrzahl von Bewegungsrichtungsumkehrungen in schneller Folge abzuschütteln. Die Pipettierspitze kann somit durch den linearmotorischen Verlagerungsantrieb längs der Verlagerungsachse in Bewegungsschwingung versetzt werden, wodurch unerwünschterweise die Pipettierspitze außen benetzende Flüssigkeit abgeworfen bzw. abgeschüttelt werden kann.

Weiterhin ermöglicht die Verwendung einer Magnetanordnung und einer Leiterschleifenanordnung dann, wenn die Leiterschleifenanordnung als Läufer wie in der vorliegenden Erfindung dem Pipettierkanal und die Magnetanordnung einem ortsfesten Gestell der Pipettieranordnung zugeordnet ist, die Bildung einer Pipettiervorrichtung mit wenigstens zwei längs der Verlagerungsachse verlagerbaren Pipettierkanälen. Da erfindungsgemäß jeder dieser Pipettierkanäle eine von der Leiterschleifenanordnung des jeweils anderen Pipettierkanals gesonderte Leiterschleifenanordnung aufweist, können die beiden Pipettierkanäle durch entsprechende Bestromung ihrer jeweiligen Leiterschleifenanordnung unabhängig voneinander längs der Verlagerungsachse verlagert werden. Dann ist es weiter vorteilhaft, wenn die Vorrichtung ein Steuergerät umfasst, welches eine Ansteuerung von wenigstens zwei unterschiedlichen Pipettierkanälen zugeordneten Leiterschleifenanordnungen mit Drehstrom unabhängig voneinander gestattet, um die unabhängige Verlagerbarkeit der wenigstens zwei längs der Verlagerungsachse verlagerbaren Pipettierkanäle bereitzustellen.

Die Anzahl an an einer einzigen Pipettiervorrichtung anordenbaren Pipettierkanäle steigt mit der Anzahl von an der Pipettiervorrichtung vorgesehenen Magnetanordnungen. Deshalb ist gemäß der vorliegenden Erfindung vorgesehen, an einer Pipettiervorrichtung mehr als eine Magnetanordnung vorzusehen.

Weiter kann es sein, dass die Abmessung einer Leiterschleifenanordnung oder eines sonstigen Bauteils des Pipettierkanals in Richtung der Verlagerungsachse größer ist als die gleichgerichtete Abmessung des Pipettierkanals. Dann bestimmen die Abmessungen der Leiterschleifenanordnungen bzw. der sonstigen Bauteile einzelner Pipettierkanäle längs der Verlagerungsachse, wie nah zwei längs der Verlagerungsachse unmittelbar benachbarte Pipettierkanäle einander längs der Verlagerungsachse angenähert werden können.

Der erreichbare Mindestabstand zwischen zwei längs der Verlagerungsachse unmittelbar benachbarten Pipettierkanäle kann erfindungsgemäß dadurch halbiert werden, dass die Vorrichtung wenigstens zwei Magnetanordnungen umfasst, wobei die Läufer zweier längs der Verlagerungsachse unmittelbar benachbarter Pipettierkanäle unterschiedlichen Magnetanordnungen zugeordnet sind und mit diesen zusammenwirken.

Ein Läufer wirkt dann mit einer Magnetanordnung im Sinne der vorliegenden Anmeldung dann zusammen, wenn er sich zur Erzeugung eines Vortriebs längs der Verlagerungsachse im Magnetfeld der Magnetanordnung befindet. Er ist dann auch dieser Magnetanordnung zugeordnet.

Ebenso kann der bei lediglich einer einzigen vorgesehenen Magnetanordnung erreichbare minimale Abstand zwischen zwei längs der Verlagerungsachse unmittelbar benachbarten Pipettierkanälen geviertelt werden, wenn die Vorrichtung vier Magnetanordnungen und wenigstens vier längs der Verlagerungsachse verlagerbare Pipettierkanäle mit je einem Läufer aufweist, wobei jeder Läufer aus einer Gruppe von vier längs der Verlagerungsachse unmittelbar aufeinander folgenden Pipettierkanälen einer anderen Magnetanordnung zugeordnet ist und mit dieser zusammenwirkt.

Allgemein gilt, dass der Abstand zwischen zwei längs der Verlagerungsachse unmittelbar benachbarten Pipettierkanälen in Richtung der Verlagerungsachse dann reduziert werden kann, wenn k Magnetanordnungen vorgesehen werden, wobei dann für jede Gruppe von k längs der Verlagerungsachse unmittelbar aufeinander folgenden Pipettierkanälen gilt, dass jeder Läufer dieser Gruppe einer anderen Magnetanordnung zugeordnet ist und mit dieser zusammenwirkt. Dabei kann die Gesamtanzahl an Pipettierkanälen der Pipettiervorrichtung den Wert k übersteigen. k ist dabei eine natürliche Zahl.

Um die erfindungsgemäße Pipettiervorrichtung in einer Abmessung sowohl orthogonal zur Kanalachse als auch orthogonal zur Verlagerungsachse möglichst kurz auszubilden, ist es vorteilhaft, wenn die wenigstens eine Magnetanordnung derart vorgesehen ist, dass die Magnete, deren Magnetfeld im Zusammenwirken mit der Bestromung einer im Magnetfeld befindlichen Leiterschleifenanordnung maßgeblich für den Vortrieb der Leiterschleifenanordnung sorgt, derart angeordnet sind, dass ihre Polarisierungsrichtung orthogonal zu einer Ebene orientiert ist, welche sowohl parallel zur Kanalachse, wie auch parallel zur Verlagerungsachse ist.

Mit Polarisierungsrichtung eines Magneten ist in dieser Anmeldung die Richtung gemeint, in welcher der Südpol eines Magneten auf seinen Nordpol folgt.

Vorteilhafterweise liegen die Pipettierkanalachsen in einer gemeinsamen Ebene, die in Richtung der Verlagerungsachse verläuft. Dadurch kann die Abmessung der Pipettiervorrichtung orthogonal zu den Kanalachsen und orthogonal zu der Verlagerungsachse vorteilhaft klein gehalten werden. Vorzugsweise ist zur Montageerleichterung die gemeinsame Ebene der Kanalachsen eine Symmetrieebene der Pipettiervorrichtung.

Um die durch die erfindungsgemäße Linearmotorkonfiguration erzielte verbesserte Annäherbarkeit unmittelbar benachbarter Pipettierkanäle auch bewegungsführungstechnisch zu unterstützen, kann vorgesehen sein, dass die Pipettiervorrichtung wenigstens zwei Linearführungsschienen aufweist, wobei diejenigen Pipettierkanäle, deren Läufer derselben Magnetanordnung zugeordnet sind, auf derselben Linearführungsschiene längs der Verlagerungsachse verlagerbar geführt sind. Vorteilhafterweise ist in der Pipettiervorrichtung für jede Magnetanordnung eine, insbesondere genau eine Linearführungsschiene, vorgesehen.

Eine kompakte Pipettiervorrichtung kann dadurch erhalten werden, dass sie ein oder zwei längs der Verlagerungsachse verlaufende Tragprofile aufweist, wobei jedes Tragprofil zwei Magnetanordnungen und zwei Linearführungsschienen trägt, wobei zur Montageerleichterung vorgesehen sein kann, dass jedes Tragprofil bezüglich einer längs der Verlagerungsachse verlaufenden Symmetrieebene im Wesentlichen symmetrisch ausgebildet ist. Zusätzlich oder alternativ kann vorgesehen sein, dass sie genau zwei parallele Tragprofile aufweist, welche bezüglich einer längs der Verlagerungsachse verlaufenden und zwischen den Tragprofilen gelegenen Symmetrieebene im Wesentlichen symmetrisch ausgebildet sind, wobei die zwischen den Tragprofilen gelegene Symmetrieebene vorzugsweise die Kanalachsen enthält.

Eine in ihren Abmessungen, insbesondere in ihren Abmessungen längs der Verlagerungsachse, kurze Leiterschleifenanordnung kann einfach und kostengünstig dadurch gebildet sein, dass die Leiterschleifenanordnung eine Leiterplatte umfasst, in welcher für wenigstens eine Leiterschleife eine Ausnehmung vorgesehen ist, in der die Leiterschleife wenigstens teilweise aufgenommen ist. Vorteilhafterweise umfasst die Leiterschleifenanordnung nur genau einen Satz mit genau drei Leiterschleifen.

Vorzugsweise ist die Leiterschleife zu ihrem besseren Schutz vor unerwünschter Verlagerung und Teilen davon vollständig in der Ausnehmung in der Leiterplatte aufgenommen.

Aus dem Grund einer bevorzugten im Wesentlichen gleichen konstruktiven Ausbildung aller Leiterschleifen einer Leiterschleifenanordnung ist vorzugsweise für mehrere Leiterschleifen, besonders bevorzugt für alle Leiterschleifen, je eine solche Ausnehmung vorgesehen.

Die Leiterschleifen umfassen einen Wicklungsdraht, dessen Dicke bzw. dessen Durchmesser kleiner ist als die Dicke bzw. der Durchmesser der Leiterschleife. Vorzugsweise umfasst die Leiterschleife Windungen, welche ausgehend von einer Wicklungsachse in radialer Richtung einander benachbart sind, und umfasst Windungen, welche in axialer Richtung, also in Tiefenrichtung der Ausnehmung, benachbart sind. Somit wird bei Durchstromung einer derartigen Leiterschleife ein lokal starkes Magnetfeld erzeugt, welches gut mit dem Magnetfeld der Magnetanordnung, in dem sie sich befindet, zusammenwirkt.

Um die Leiterschleifen der Leiterschleifenanordnung mechanisch möglichst gut vor äußeren Einflüssen schützen zu können, ist es weiter vorteilhaft, wenn die Ausnehmung der Leiterplatte von einer Seitenfläche derselben ausgehend in Dickenrichtung der Leiterplatte mit einer Tiefe eingebracht ist, welche kleiner ist als die Dicke der Leiterplatte. Somit ist eine Leiterschleife der Leiterschleifenanordnung an wenigstens drei Seiten von Material der Leiterplatte umgeben und dadurch mechanisch geschützt.

Eine in Richtung der vorzugsweise parallelen Wicklungsachsen der Leiterschleifen möglichst dünne Leiterschleifenanordnung kann dabei dadurch erhalten werden, dass die Leiterschleifen eines Satzes längs der Verlagerungsachse überlappungsfrei aufeinander folgen.

Vorzugsweise entspricht die Abmessung der Ausnehmung in Dickenrichtung der Leiterplatte der Abmessung der darin aufzunehmenden Leiterschleife, so dass die Leiterschleife nach ihrer Anordnung in der Ausnehmung im Wesentlichen bündig mit der ausgenommenen Außenfläche der Leiterplatte ist. Dies ist jedoch nicht zwingend vorgeschrieben. Dann, wenn es auf die Kürze der Leiterschleifenanordnung in Richtung der Verlagerungsachse ankommt, kann es ebenso bevorzugt sein, wenn die Leiterschleifen eines Satzes derart vorgesehen sind, dass sich zwei längs der Verlagerungsachse unmittelbar benachbarte Leiterschleifen, vorzugsweise alle drei längs der Verlagerungsachse unmittelbar aufeinander folgende Leiterschleifen, längs der Verlagerungsachse überlappen.

Eine besonders dünne Leiterschleifenanordnung kann beispielsweise dann gewünscht sein, wenn die Leiterschleifenanordnung in dem zuvor genannten Spalt zwischen zwei parallelen Magnetanordnungen aufgenommen werden soll, da dann der Spalt entsprechend klein ausfallen kann. Es soll jedoch keinesfalls ausgeschlossen sein, dass auch solche Leiterschleifen dünn ausgeführt werden, denen auf lediglich einer Seite eine Magnetanordnung gegenüberliegt.

Weiterhin kann zur Verbesserung des magnetischen Flusses daran gedacht sein, die Magneten einer Magnetanordnung in einer so genannten "Halbachanordnung" anzuordnen, d. h. dass zwischen zwei Nutzmagneten, welche im Wesentlichen das für den Vortrieb der diesen zugeordneten Leiterschleifenanordnung erforderlich Magnetfeld bereitstellen, je ein Flussmagnet angeordnet ist, dessen Polarisierungsrichtung zu jeder der Polarisierungsrichtungen der unmittelbar benachbarten Nutzmagneten im Wesentlichen orthogonal ist. Üblicherweise sind die Polarisierungsrichtungen unmittelbar benachbarter Nutzmagneten entgegengesetzt gerichtet und verlaufen in Richtung der Wicklungsachsen der Leiterschleifen.

Die vorliegende Erfindung wird in den nachfolgenden Zeichnungen anhand einer erfindungsgemäßen Ausführungsform näher beschrieben werden. Es stellt dar:
- Fig. 1: eine Querschnittsansicht eines Teils einer erfindungsgemäßen Pipettiervorrichtung mit Blickrichtung längs der Verlagerungsachse bei zur Verlagerungsachse orthogonaler Schnittebene,
- Fig. 2: ein anderes, jenem von Fig. 1 funktional entsprechendes Teil derselben Pipettiervorrichtung,
- Fig. 3: das Teil der Pipettiervorrichtung von Fig. 1, erweitert um Pipettierkanal und Elektronik desselben,
- Fig. 4: die Pipettiervorrichtung von Fig. 3 in der Vorderansicht gemäß Blickrichtung IV von Fig. 3,
- Fig. 5: eine perspektivische Vorderansicht der Pipettiervorrichtung der Fig. 3 und 4,
- Fig. 6: eine perspektivische Explosionsansicht einer einen Läufer der vorliegenden Pipettiervorrichtung bildenden Leiterschleifenanordnung von schräg vorne,
- Fig. 7: eine perspektivische Explosionsansicht der Leiterschleifenanordnung von Fig. 6 von schräg hinten, und
- Fig. 8: die Pipettiervorrichtung von Fig. 3 mit einem zweiten Tragprofil.

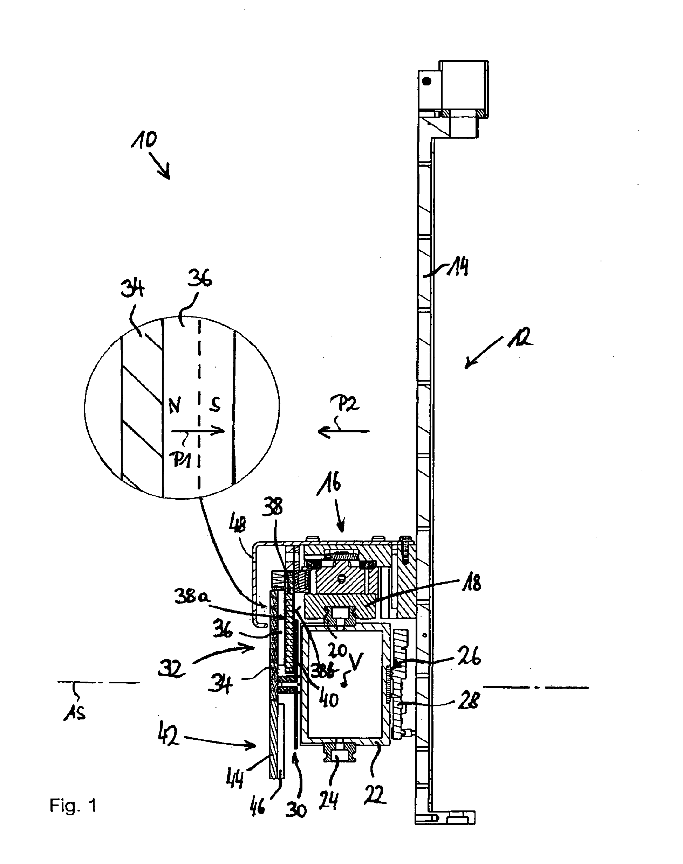

In Fig. 1, deren Zeichenebene orthogonal zur Verlagerungsachse V orientiert ist, ist ein längs der Verlagerungsachse V linearmotorisch antreibbares Gestell eines Pipettierkanals einer Pipettiervorrichtung 10 allgemein mit 12 bezeichnet.

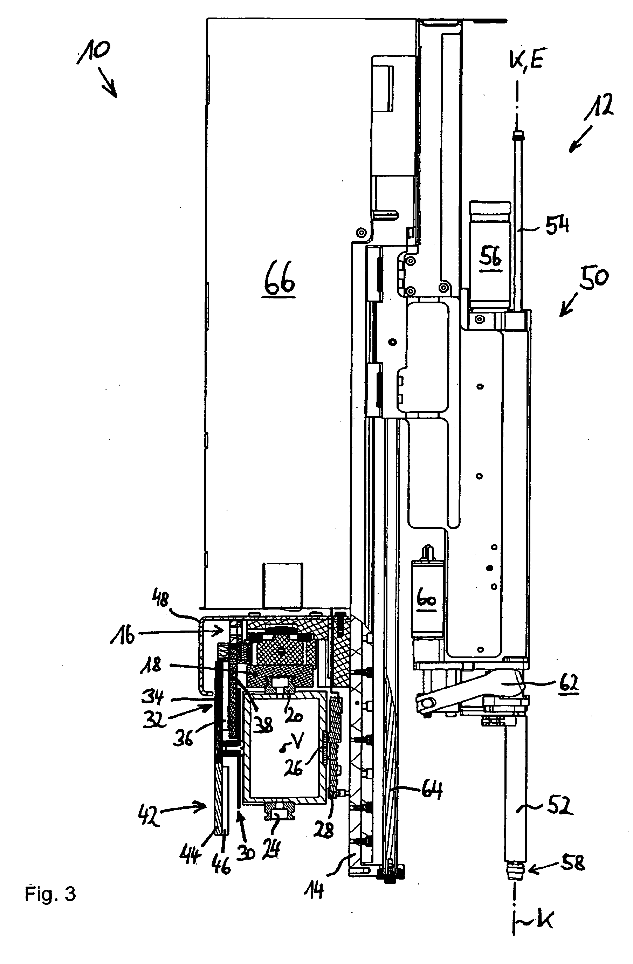

Das Gestell 12 umfasst einen Pipettierkanalträger 14, an welchem, wie weiter unten in Fig. 3 dargestellt, ein Pipettierkanal 50 angeordnet sein kann (siehe Fig. 3).

Der Pipettierkanalträger 14 ist über eine hier nicht näher interessierende Verbindungsstruktur 16 mit einem Wagen 18 einer Linearführungseinrichtung zur gemeinsamen Bewegung mit diesem verbunden. Der Linearführungswagen 18 ist in an sich bekannter Weise auf einer Linearführungsschiene 20 längs der Verlagerungsachse V verlagerbar geführt. Die Linearführungsschiene 20 verläuft dazu längs der Verlagerungsachse V und ist auf einem ebenfalls längs der Verlagerungsachse V verlaufenden Tragprofil 22 (hier: Vierkant-Tragprofil) festgelegt. Das Tragprofil 22 weist eine weitere Führungsschiene 24 auf, welche parallel zur Führungsschiene 20 am Tragprofil 22 festgelegt ist. Die Linearführungsschienen 20 und 24 befinden sich im dargestellten Beispiel auf entgegengesetzten Außenflächen des Tragprofils 22.

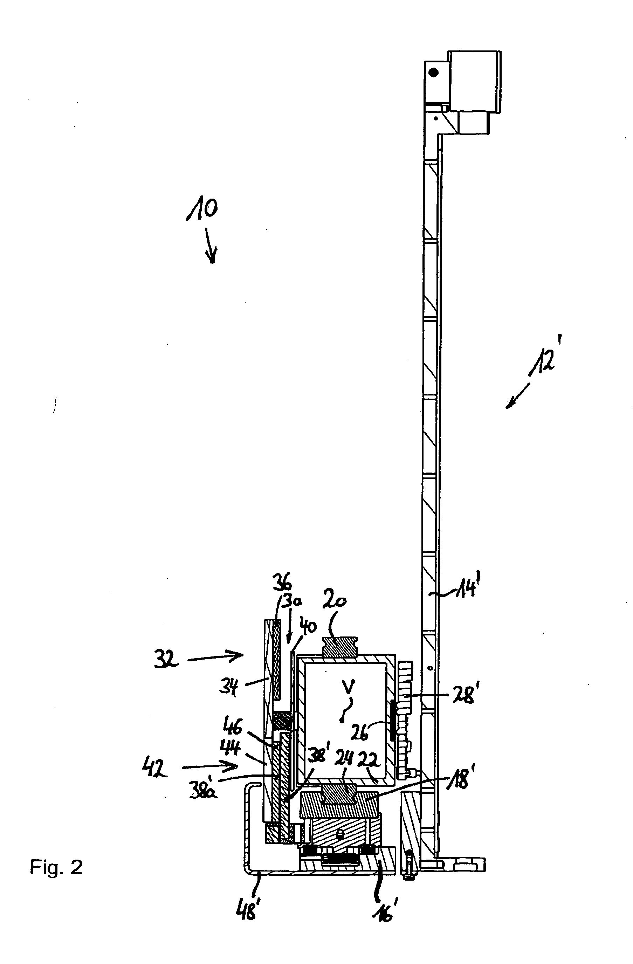

Die Linearführungsschiene 24 dient, wie weiter unten im Zusammenhang mit Fig. 2 erläutert werden wird, ebenfalls der Bewegungsführung von Pipettierkanalträgern längs der Verlagerungsachse V.

An der dem Pipettierkanalträger 14 zugewandten Seite des Tragprofils 22 ist ein Kodierungsmaßstab 26 vorgesehen, mit welchem eine zur gemeinsamen Verlagerung mit dem Pipettierkanalträger 14 verbundene Leseeinrichtung 28 zur Positionsbestimmung des Pipettierkanalträgers 14 in an sich bekannter Weise längs der Verlagerungsachse V zusammenwirkt.

An der dem Pipettierkanalträger 14 abgewandten Seite des Tragprofils 22 ist über eine Halterung 30 eine Magnetanordnung 32 vorgesehen, welche auf einer ferromagnetischen Trägerplatte 34 Permanentmagnete 36 aufweist, die mit alternierenden Polarisierungsrichtungen längs der Verlagerungsachse V aufeinander folgend vorgesehen sind. Beispielsweise können die Permanentmagnete 36 auf die ferromagnetische Trägerplatte 34 aufgeklebt sein.

Mit "Polarisierungsrichtung" eines Permanentmagneten ist in der vorliegenden Anmeldung jene Richtung bezeichnet, mit welcher der Südpol in dem Magneten auf den Nordpol desselben Magneten folgt.

Beispielsweise kann der in Fig. 1 sichtbare Permanentmagnet 36 der oberen Magnetanordnung 32 derart hinsichtlich seiner Polarisierung orientiert sein, dass sein Nordpol auf der ferromagnetischen Trägerplatte 34 aufliegt, also zu dieser hinweist, während der Südpol desselben Magneten von der ferromagnetischen Trägerplatte 34 weg zum Pipettierkanalträger 14 hin weist. In diesem Falle ist die Polarisierungsrichtung dieses Permanentmagneten 36, wie in dem Bildausschnitt von Fig. 1 als Polarisierungsrichtung P1 dargestellt, orthogonal zur Verlagerungsachse und orthogonal zur Erstreckungsebene der ferromagnetischen Trägerplatte 34 von dieser weg weisend.

Der längs der Verlagerungsachse auf den in Fig. 1 erkennbaren Permanentmagneten 36 folgende Nachbar-Permanentmagnet weist daher eine zur Polarisierungsrichtung P1 entgegengesetzte Polarisierungsrichtung P2 auf. Der übernächste Permanentmagnet ist mit seiner Polarisierungsrichtung P1 entsprechend dem oben diskutierten Permanentmagneten 36 angeordnet usw.

In dem Magnetfeld der Magnetanordnung 32, bei welcher die ferromagnetische Trägerplatte 34 für einen vorteilhaften magnetischen Rückschluss der längs der Verlagerungsachse V aufeinander folgend vorgesehenen Permanentmagnet 36 sorgt, ist eine Leiterschleifenanordnung 38 angeordnet, welche zur gemeinsamen Bewegung längs der Verlagerungsachse V mit der Verbindungsstruktur 16 an dieser vorgesehen ist.

In dem dargestellten Beispiel liegt nur der vom Pipettierkanalträger 14 weg weisenden Seite 38a der Leiterschleifenanordnung 38 eine Magnetanordnung 32 gegenüber, während der entgegengesetzten zum Pipettierkanalträger 14 hin weisenden Seite 38b keine Magnetanordnung, sondern lediglich ein Schutzblech 40 gegenüberliegt.

Die Halterung 30 ist bezüglich einer in Richtung der Verlagerungsachse V verlaufenden und zur Zeichenebene von Fig. 1 sowie zur Haupterstreckungsebene der ferromagnetischen Trägerplatte 34 orthogonalen Symmetrieebene AS im Wesentlichen symmetrisch, so dass in Fig. 1 unter der Magnetanordnung 32 eine weitere Magnetanordnung 42 vorgesehen ist, welche wiederum eine ferromagnetische Trägerplatte 44 mit daran angebrachten Permanentmagneten 46 aufweist. Die Magnetanordnung 42 ist im Wesentlichen wie die zuvor beschriebene Magnetanordnung 32 ausgebildet, also mit einer Reihe von Permanentmagneten, welche längs der Verlagerungsachse V mit alternierender Polarisierungsrichtung aufeinander folgen.

Die Verbindungsstruktur 16 weist ein die Magnetanordnung 32 übergreifendes Schutzblech 48 auf, um den zwischen der Magnetanordnung 32 und der Leiterschleifenanordnung 38 bestehenden Luftspalt vor dem Eintritt von Verschmutzung zu schützen.

In Fig. 2 ist das Tragprofil 22 an einer anderen axialen Stelle bezogen auf die Verlagerungsachse V mit einer zur Schnittebene der Fig. 1 parallelen Schnittebene geschnitten.

Es zeigt ein dem linearmotorisch verlagerbaren Gestell 12 von Fig. 1 längs der Verlagerungsachse V unmittelbar benachbartes, ebenfalls linearmotorisch verlagerbares Gestell 12'.

Gleiche und funktionsgleiche Bauteile und Bauteilabschnitte des linearmotorisch verlagerbaren Gestells 12' sind mit gleichen Bezugszeichen versehen wie die entsprechenden Bauteile und Bauteilabschnitte des linearmotorisch verlagerbaren Gestells 12 von Fig. 1, sind jedoch zur Unterscheidung mit Apostrophierung versehen.

Die Darstellung von Fig. 2 wird nur insofern erläutert, als es sich von jener von Fig. 1 unterscheidet, auf deren Beschreibung ausdrücklich verwiesen wird.

Der wesentliche Unterschied zwischen den linearmotorisch antreibbaren Gestellen 12 und 12' liegt darin, dass das Gestell 12' mit einem Führungswagen 18' auf der Linearführungsschiene 24 am Tragprofil 22 längs der Verlagerungsachse V verlagerbar geführt ist. Daher ist die mit der Verbindungsstruktur 16' zur gemeinsamen Bewegung längs der Verlagerungsachse V gekoppelte Leiterschleifenanordnung 38a' der in den Fig. 1 und 2 unteren Magnetanordnung 42 zugeordnet und wirkt mit dieser zusammen.

Aufgrund der alternierenden Führung unmittelbar längs der Verlagerungsachse V aufeinander folgender Pipettierkanalträger 14 bzw. 14' an der oberen Führungsschiene 20 und an der unteren Führungsschiene 24 können die Pipettierkanalträger 14 bzw. 14' und die daran betriebsmäßig befestigten Pipettierkanäle (siehe Fig. 3) in Richtung der Verlagerungsachse V näher aneinander angenähert werden, da sich die Führungswägen 18 bzw. 18' und die daran aufgenommenen Verbindungsstrukturen 16 bzw. 16' mit den Leiterschleifenanordnungen 38 bzw. 38' in axialer Richtung überlappen können, was bei Führung aller Gestelle 12 bzw. 12' auf einer einzigen Linearführungsschiene nicht möglich wäre. Der axiale Überlappungsbetrag bildet somit den Gewinn an axialer Annäherung durch Verwendung von zwei parallelen Führungsschienen 20 und 24.

In Fig. 3 ist das Gestell 12 von Fig. 1 mit einem Pipettierkanal 50 ausgerüstet dargestellt.

An dem Pipettierkanalträger 14 ist der Pipettierkanal 50 mit der Kanalachse K aufgenommen, welche orthogonal zur Verlagerungsachse V verläuft.

Der Pipettierkanal 50 weist einen Zylinder 52 und einen im Zylinder 52 relativ zu diesem längs der Kanalachse K beweglichen Kolben 54 auf, welcher durch den Kolbenantrieb 56 antreibbar ist.

An seinem dosiernahen Längsende 58 weist der Zylinder 52 bzw. der Pipettierkanal 50 eine an sich bekannte Kopplungsgeometrie mit Quetschring zur Ankopplung von Pipettierspitzen auf. Der Kopplungsmechanismus zum Halten und Lösen von nicht dargestellten Pipettierspitzen am Pipettierkanal 50 wird durch einen an sich bekannten Kopplungsantrieb 60 mit Kopplungsgetriebe 62 betätigt.

Weiter weist das linearmotorisch verstellbare Gestell 12 eine Führungsschiene 64 auf, welche in Richtung der Kanalachse K verläuft und an welcher der Pipettierkanal 50 längs der Kanalachse K verstellbar vorgesehen ist. Auch die Verstellung des Pipettierkanals 50 längs der Kanalachse K an der Führungsschiene 64 erfolgt bevorzugt motorisch.

Zur Steuerung der einzelnen Antriebe, insbesondere auch des linearmotorischen Antriebs des Gestells 12 ist der Pipettierkanal 50 mit einer Elektronik 66 verbunden, in welcher Steuergeräte und Signalleitungen sowie Energieversorgungsgeräte und -leitungen vorgesehen sind, um die einzelnen Antriebe entsprechend von Steuerungsvorgaben anzusteuern. Insbesondere ist durch die Elektronik 66 die Leiterschleifenanordnung 38 mit dreiphasigem Strom versorgbar, so dass das Gestell 12 im Zusammenwirken mit der Positionserfassung durch die Leseeinrichtung 28 auf der Kodierung 26 exakt in eine gewünschte Position längs der Verlagerungsachse V verlagerbar ist.

Die Elektronik 66 kann wiederum mit einer nicht dargestellten zentralen Eingabe/Ausgabevorrichtung oder/und einer Speichervorrichtung gekoppelt sein. Beispielsweise kann die Elektronik 66 Steuerungsbefehle über ein Programm oder über eine manuelle Eingabe erhalten, etwa über Tastatur, Touchscreen, und dergleichen.

Weiter sei darauf hingewiesen, dass alle Kanalachsen K einer Pipettiervorrichtung 10 vorzugsweise in einer in Richtung der Verlagerungsachse V verlaufenden Ebene gelegen sind. Die Haupterstreckungsebenen der Magnetanordnungen 32 und 42 sind zur Erzielung einer Pipettiervorrichtung mit vorteilhaft kurzer Tiefe vorzugsweise parallel zu der aus Kanalachse(n) K und Verlängerungsachse V aufgespannten Ebene. Die in Fig. 3 dargestellte Anordnung kann an einer die Kanalachsen K enthaltenden Symmetrieebene E gespiegelt zusätzlich vorhanden sein, um die Dichte von Pipettierkanälen 50 zu erhöhen.

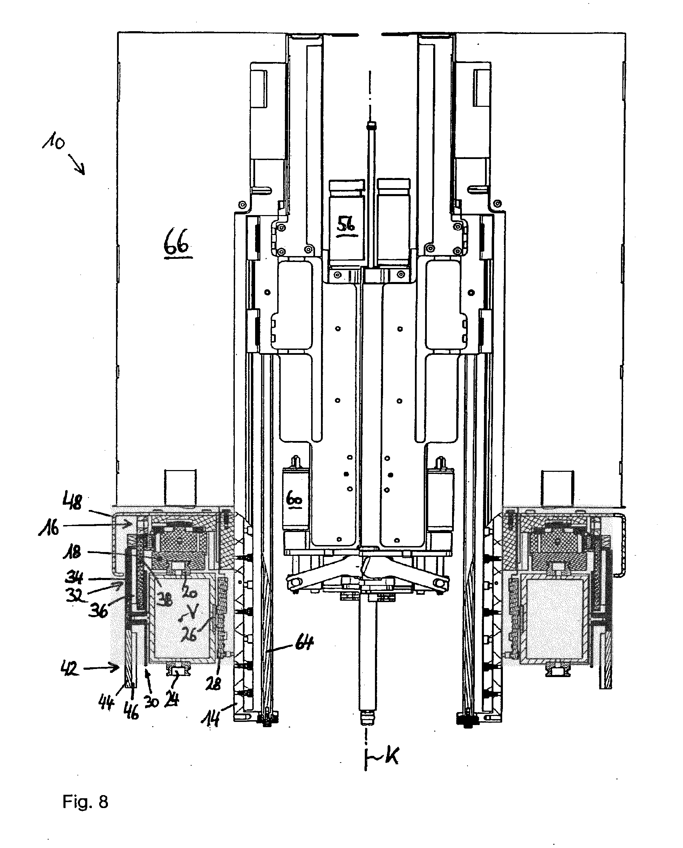

Dann sind also zwei parallele Tragprofile 22 mit je zwei Magnetanordnungen 32 und 42 pro Tragprofil vorhanden, wobei die Pipettierkanäle zwischen den beiden Tragprofilen gelegen sind. Dies ist schematisch in Fig. 8 dargestellt. Die Perspektiven der Fig. 3 und 8 auf die vorliegende Pipettiervorrichtung sind dieselben.

In diesem Fall ist es vorteilhaft, wenn für jede Gruppe von vier längs der Verlagerungsachse V unmittelbar aufeinander folgenden Pipettierkanälen gilt, dass die Leiterschleifenanordnung jedes Pipettierkanals aus dieser Vierergruppe einer anderen Magnetanordnung zugeordnet ist und mit dieser zusammenwirkt.

Da sich dann Leiterschleifenanordnung, Führungswagen, Verbindungsstruktur und Pipettierkanäle einer solchen Vierergruppe axial überlagern können, kann eine noch größere axiale Annäherung unmittelbar aufeinander folgender Pipettierkanäle erreicht werden als dies bei lediglich zwei Führungsschienen und einem Tragprofil der Fall ist.

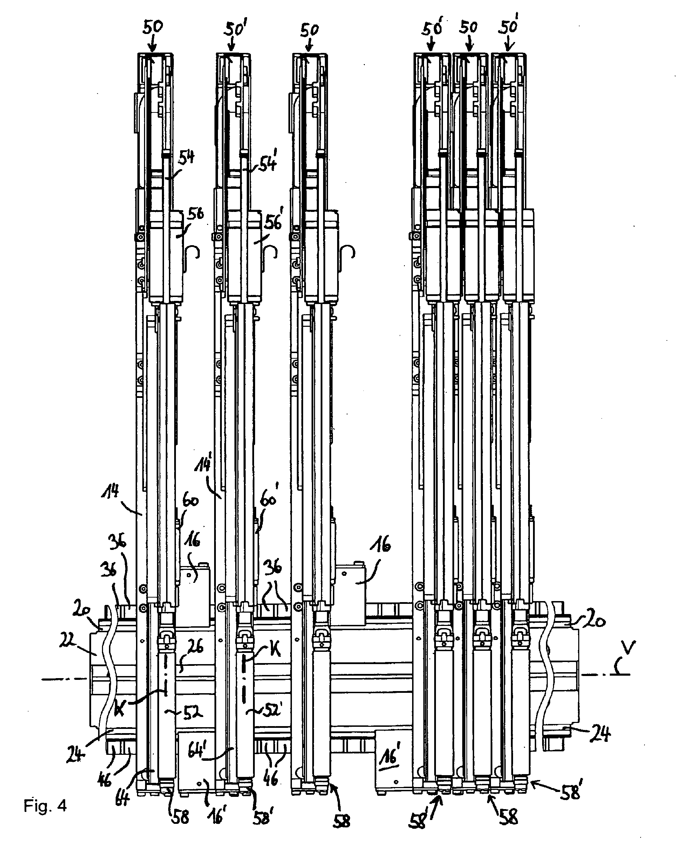

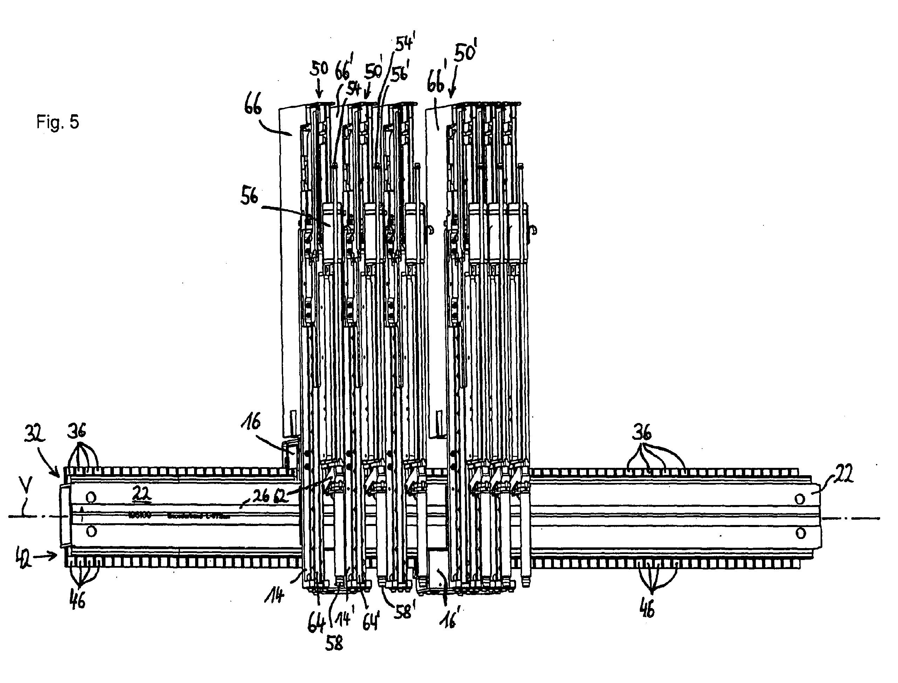

In Fig. 4 ist der Abschnitt der in Fig. 3 dargestellte Abschnitt der Pipettiervorrichtung 10 in der Vorderansicht dargestellt. Fig. 5 zeigt die Pipettiervorrichtung 10 von Fig. 4 leicht von der Seite.

Zu erkennen in diesen Bildern sind die Reihen von Permanentmagneten 36 und 46 zur Bildung der Magnetanordnungen 32 und 42.

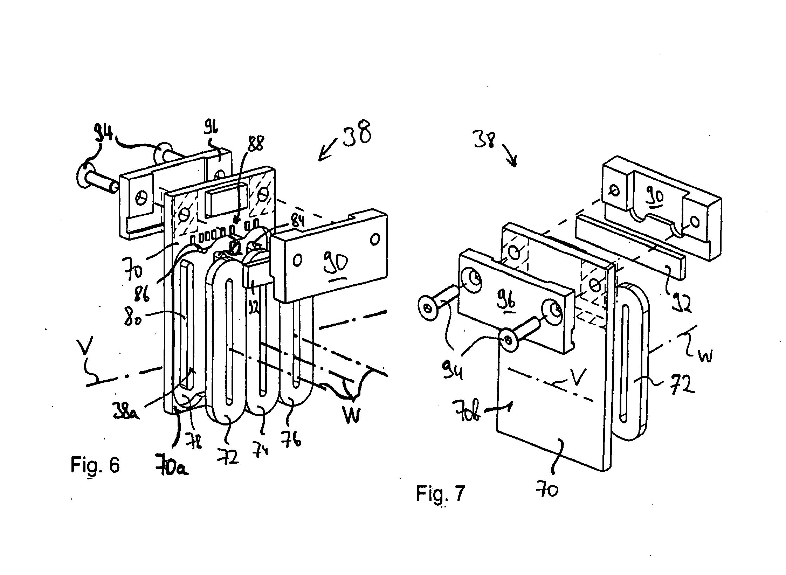

In Fig. 6 ist eine Leiterschleifenanordnung 38 in einer perspektivischen Explosionsansicht von schräg vorne dargestellt. Sie umfasst eine Leiterplatte 70 aus einem Kunststoff, etwa einem Kunststoffharz, auf deren einer zur Wicklungsachse W der Leiterschleifen 72, 74 und 76 orthogonalen Seite 70a eine Ausnehmung 78 vorgesehen ist, in die die Wicklungen 72, 74 und 76 eingelegt sind. Jede der Leiterschleifen 72, 74 und 76 ist einer anderen Phase einer dreiphasigen Drehstromversorgung zugeordnet und an diese anschließbar oder angeschlossen.

Stege 80, 82 und 84 in der Ausnehmung 78 erleichtern die Anordnung und den Sitz der Leiterschleifen 72, 74 und 76 in der Ausnehmung 78, da die Stege 80, 82 und 84 in zentrale Ausnehmungen der Wicklungen 72, 74 und 76 eingreifen können.

Die Wicklungsdrähte der einzelnen Leiterschleifen 72, 74 und 76 sind im einheitlichen Wicklungssinn um die Wicklungsachsen W herum gewickelt. Die Wickungsdrähte sind dabei so bemessen, dass Windungen der Leiterschleifen 72, 74 und 76 sowohl in radialer Richtung als auch in axialer Richtung bezogen auf die jeweilige Wicklungsachse W benachbart sind.

Die Seite 70a der Leiterplatte 70 fällt bei der fertig montierten Leiterschleifenanordnung 38 mit der in den Fig. 1 bis 3 zur jeweiligen zugeordneten Magnetanordnung hin weisenden Seite 38a der Leiterschleifenanordnung 38 zusammen.

Die Ausnehmung 78 ist ausgehend von der Seitenfläche 70a in Richtung der Wicklungsachsen W, also in Dickenrichtung der Leiterplatte 70, so bemessen, dass die Leiterschleifen 72, 74 und 76 darin bündig aufgenommen werden können. Mit anderen Worten: Die Tiefe der Ausnehmung 78 entspricht im Wesentlichen der axialen Ausdehnung der Leiterschleifen 72, 74 und 76.

Verbleibende Luftspalte zwischen der Leiterplatte 70 und den Leiterschleifen 72, 74 und 76 nach dem Einlegen der Leiterschleifen 72, 74 und 76 in die Ausnehmung 78 können mit einem fließfähigen Kunststoff, etwa einem Kunststoffharz, ausgegossen werden, um den Halt und den Sitz der Leiterschleifen 72, 74 und 76 in der Leiterplatte 70 zu verbessern.

An der Leiterplatte 70 kann ein Temperatursensor 86 vorgesehen sein, um die Betriebssicherheit der Leiterschleifenanordnung 38 und des linearmotorischen Antriebs insgesamt zu erhöhen.

Weiter kann die Leiterplatte 70 Anschlusskontakte 88 aufweisen, welche zum elektrischen Anschluss der Leiterschleifen 72, 74 und 76 vorbereitet sind.

Zur Befestigung der Leiterschleifenanordnung 38 kann eine Befestigungsbasis 90 vorgesehen sein, welche in den strichliniert schraffierten rechteckigen Eckbereichen der Leiterplatte 70 diese kontaktiert und zwischen Leiterplatte 70 und sich selbst eine Wärmeleitfolie 92 klemmt. Die Befestigungsbasis 90 ist vorzugsweise aus Aluminium gefertigt, um bei vorgegebenem Bauteilvolumen und vorgegebener Bauteilfestigkeit Gewicht einzusparen und gute Wärmeleitfähigkeitseigenschaften bereitzustellen. Die Wärmeleitfolie 92 kann aus Silikon hergestellt sein.

Auf der Rückseite 70b der Leiterplatte 70 (siehe Fig. 7) ist über Schrauben 94 ein Klemmstück 96 bereitgestellt, welches die Rückseite 70b der Leiterplatte 70 längs der in Fig. 7 ebenfalls strichliniert schraffierten Bereiche kontaktiert. Die Leiterplatte 70 ist somit über die Schauben 94 zwischen der Befestigungsbasis 90 und dem Klemmstück 96 klemmend gehalten.

Das Klemmstück 96 ist vorzugsweise wie die Befestigungsbasis 90 aus Aluminium hergestellt, um ausreichende Bauteilfestigkeit bei gleichzeitig möglichst geringem Bauteilgewicht und guter Wärmeleitung bereitzustellen.

## Patentansprüche

1. Pipettiervorrichtung mit wenigstens zwei sich längs einer Kanalachse (K) erstreckenden Pipettierkanälen (50, 50'), von welchen jeder längs der Kanalachse (K) verstellbar ist, wobei die Pipettiervorrichtung (10) einen Verlagerungsantrieb aufweist, mit welchem jeder Pipettierkanal (50, 50') unabhängig von einer Verstellung längs der Kanalachse (K) und unabhängig vom jeweils anderen Pipettierkanal (50, 50') längs einer zur Kanalachse (K) orthogonalen Verlagerungsachse (V) verlagerbar ist, wobei der Verlagerungsantrieb einen Linearmotor umfasst, dessen Stator wenigstens zwei Magnetanordnungen (32, 42) aufweist, welche auf einem Magnetträger (34, 44) eine Reihe von längs der Verlagerungsachse (V) aufeinander folgenden, hinsichtlich ihrer Polarität (P1, P2) unterschiedlich angeordneten Magneten (36) umfassen, und dessen Läufer (bei 38, bei 38') wenigstens eine Leiterschleifenanordnung (38) aufweist, welche wenigstens einen Satz von drei längs der Verlagerungsachse (V) aufeinander folgenden Leiterschleifen (72, 74, 76) umfasst, von welchen jede einer anderen Phase einer Drehstromversorgung zuordenbar oder zugeordnet ist, wobei jeder Pipettierkanal (50, 50') wenigstens eine Leiterschleifenanordnung (38, 38') aufweist, wobei die Läufer (bei 38, bei 38') zweier längs der Verlagerungsachse (V) unmittelbar benachbarter Pipettierkanäle (50, 50') unterschiedlichen Magnetanordnungen (32, 42) zugeordnet sind und mit diesen zusammenwirken.

2. Pipettiervorrichtung nach Anspruch 1,
**dadurch gekennzeichnet, dass** sie eine Anzahl k, mit k größer oder gleich 2, von Magnetanordnungen (32, 42) aufweist und eine Anzahl n, mit n größer oder gleich k, von Pipettierkanälen (50, 50') aufweist, wobei für jede Gruppe von k längs der Verlagerungsachse (V) unmittelbar aufeinander folgenden Pipettierkanälen (50, 50') gilt, dass jeder Läufer dieser Gruppe einer anderen Magnetanordnung (32, 42) zugeordnet ist und mit dieser zusammenwirkt.

3. Pipettiervorrichtung nach Anspruch 1 oder 2,
**dadurch gekennzeichnet, dass** die Vorrichtung (10) vier Magnetanordnungen (32, 32) und wenigstens vier längs der Verlagerungsachse (V) verlagerbare Pipettierkanäle (50, 50') mit je einem Läufer (bei 38, bei 38') aufweist, wobei jeder Läufer (bei 38, bei 38') aus einer Gruppe von vier längs der Verlagerungsachse (V) unmittelbar aufeinander folgenden Pipettierkanälen (50, 50') einer anderen Magnetanordnung (32, 42) zugeordnet ist und mit dieser zusammenwirkt.

4. Pipettiervorrichtung nach einem der vorhergehenden Ansprüche,
**dadurch gekennzeichnet, dass** die Pipettierkanalachsen (K) der Pipettierkanäle (50, 50') in einer gemeinsamen Ebene gelegen sind, welche in Richtung der Verlagerungsachse (V) verläuft.

5. Pipettiervorrichtung nach einem der vorhergehenden Ansprüche,
**dadurch gekennzeichnet, dass** sie wenigstens zwei Linearführungsschienen (20, 24) aufweist, wobei die Pipettierkanäle (50, 50'), deren Läufer derselben Magnetanordnung (32, 42) zugeordnet sind, auf derselben Linearführungsschiene (20 oder 24) längs der Verlagerungsachse (V) verlagerbar geführt sind.

6. Pipettiervorrichtung nach Anspruch 5,
**dadurch gekennzeichnet, dass** sie ebensoviele Linearführungsschienen (20, 24) wie Magnetanordnungen (32, 42) aufweist.

7. Pipettiervorrichtung nach einem der vorhergehenden Ansprüche,
**dadurch gekennzeichnet, dass** sie ein oder zwei längs der Verlagerungsachse (V) verlaufende Tragprofile (22) aufweist, wobei jedes Tragprofil (22) zwei Magnetanordnungen (32, 42) und zwei Linearführungsschienen (20, 24) trägt.

8. Pipettiervorrichtung nach Anspruch 7,
**dadurch gekennzeichnet, dass** jedes Tragprofil (22) bezüglich einer längs der Verlagerungsachse (V) verlaufenden Symmetrieebene (AS) im Wesentlichen symmetrisch ausgebildet ist.

9. Pipettiervorrichtung nach Anspruch 7 oder 8,
**dadurch gekennzeichnet, dass** sie genau zwei parallele Tragprofile (22) aufweist, welche bezüglich einer längs der Verlagerungsachse (V) verlaufenden und zwischen den Tragprofilen (22) gelegenen Symmetrieebene (E) im Wesentlichen symmetrisch ausgebildet sind, wobei die zwischen den Tragprofilen (22) gelegene Symmetrieebene (E) vorzugsweise die Kanalachsen (K) enthält.

10. Pipettiervorrichtung nach einem der vorhergehenden Ansprüche,
**dadurch gekennzeichnet, dass** eine Magnetanordnung (32, 42) nur auf einer Seite einer Leiterschleifenanordnung (38, 38') vorgesehen ist.

11. Pipettiervorrichtung nach einem der vorhergehenden Ansprüche,
**dadurch gekennzeichnet, dass** die Leiterschleifenanordnung (38, 38') genau einen Satz von drei längs der Verlagerungsachse (V) aufeinander folgenden Leiterschleifen (72, 74, 76) umfasst.

12. Pipettiervorrichtung nach einem der vorhergehenden Ansprüche,
**dadurch gekennzeichnet, dass** die Leiterschleifenanordnung (38, 38') eine Leiterplatte (70) umfasst, in welcher für alle Leiterschleifen (72, 74, 76) eine Ausnehmung (78) vorgesehen ist, in welcher die Leiterschleifen wenigstens teilweise aufgenommen sind.

13. Pipettiervorrichtung nach einem der vorhergehenden Ansprüche,
**dadurch gekennzeichnet, dass** die Leiterschleifen (72, 74, 76) eines Satzes längs der Verlagerungsachse (V) überlappungsfrei aufeinander folgen.

14. Pipettiervorrichtung nach einem der vorhergehenden Ansprüche,
**dadurch gekennzeichnet, dass** die Magnete (36, 46) einer Magnetanordnung (32, 42) derart orientiert vorgesehen sind, dass ihre Polarisierungsrichtung (P1, P2) orthogonal zu einer aus Kanalachse (K) und Verlagerungsachse (V) aufgespannten Ebene sind.

## Claims

1. Pipetting device with at least two pipetting channels (50, 50') extending along a channel axis (K), each of them being adjustable along the channel axis (K), the pipetting device (10) comprising a displacement drive by which each pipetting channel (50, 50') can, regardless of an adjustment along the channel axis (K) and regardless of the other pipetting channel (50, 50'), be displaced along a displacement axis (V) which is orthogonal to the channel axis (K), said displacement drive comprising a linear motor, whose stator comprises at least two magnet arrangements (32, 42), comprising on a magnet carrier (34, 44) a row of consecutive magnets (36) along the displacement axis (V) and arranged differently in terms of their polarity (P1, P2), and whose armature (at 38, at 38') comprises at least one conductor loop arrangement (38) comprising at least one set of three consecutive conductor loops (72, 74, 76) along the displacement axis (V), each of which being associable or associated to another phase of a three-phase supply, each pipetting channel (50, 50') comprising at least one conductor loop arrangement (38, 38'), wherein the armatures (at 38, at 38') of two pipetting channels (50, 50') which are directly adjacent along the displacement axis (V) are associated to different magnet arrangements (32, 42) and cooperate with the latter.

2. Pipetting device according to claim 1,
**characterized in that** it comprises a number k of magnet arrangements (32, 42), with k being equal or superior to 2, and a number n of pipetting channels (50, 50'), with n being equal or superior to k, wherein in each group of k pipetting channels (50, 50') arranged directly in sequence along the displacement axis (V) each armature of this group is associated to and cooperates with another magnet arrangement (32, 42).

3. Pipetting device according to claims 1 or 2,
**characterized in that** the device (10) comprises four magnet arrangements (32, 32) and at least four pipetting channels (50, 50') which can be displaced along the displacement axis (V), with each armature (at 38, at 38') out of a group of four pipetting channels (50, 50') arranged directly in sequence along the displacement axis (V) being associated to another magnet arrangement (32, 42) and cooperating with the latter.

4. Pipetting device according to one of the preceding claims,
**characterized by** the pipetting channel axes (K) of the pipetting channels (50, 50') being located in a common plane running in the direction of the displacement axis (V).

5. Pipetting device according to one of the preceding claims,
**characterized in that** it comprises at least two linear guide rails (20, 24), wherein those pipetting channels (50, 50') whose armatures are associated to the same magnet arrangement (32, 42) are guided in a displaceable way on the same guide rail (20 or 24) along the displacement axis (V).

6. Pipetting device according to claim 5,
**characterized by** the device comprising the same number of guide rails (20, 24) and magnet arrangements (32, 42).

7. Pipetting device according to one of the preceding claims,
**characterized by** the device comprising one or two supporting profiles (22) disposed in the direction of the displacement axis (V), each supporting profile (22) supporting two magnet arrangements (32, 42) and two linear guide rails (20, 24).

8. Pipetting device according to claim 7,
**characterized by** each supporting profile (22) being adapted substantially symmetrical in relation to a symmetry plane (AS) following the direction of the displacement axis (V).

9. Pipetting device according to claims 7 or 8,
**characterized in that** it comprises two parallel supporting profiles (22) being adapted substantially symmetrical in relation to a symmetry plane (E) following the direction of the displacement axis (V), situated between the supporting profiles (22), the symmetry plane (E) which is situated between the supporting profiles (22) comprising preferably the channel axes (K).

10. Pipetting device according to one of the preceding claims,
**characterized by** a magnet arrangement (32, 42) being only provided on one side of the conductor loop arrangement (38, 38').

11. Pipetting device according to one of the preceding claims,
**characterized by** the conductor loop arrangement (38, 38') comprising exactly one set of three consecutive conductor loops (72, 74, 76) in the direction of the displacement axis (V).

12. Pipetting device according to one of the preceding claims,
**characterized by** the conductor loop arrangement (38, 38') comprising a circuit board (70) providing a recess (78) for all conductor loops (72, 74, 76), in which the conductor loops are at least partly received.

13. Pipetting device according to one of the preceding claims,
**characterized by** the conductor loops (72, 74, 76) of a set succeeding one another along the displacement axis (V) without overlapping.

14. Pipetting device according to one of the preceding claims,
**characterized by** the magnets (36, 46) of a magnet arrangement (32, 42) being oriented such that their direction of polarization (P1, P2) is orthogonal to a plane formed by the channel axis (K) and the displacement axis (V).

## Revendications

1. Dispositif pour pipettes avec au moins deux canaux de pipettage (50, 50') s'étendant le long d'un axe de canal (K), chacun d'eux étant ajustable le long de l'axe de canal (K), le dispositif pour pipettes (10) comprenant un entraînement de déplacement au moyen duquel chaque canal de pipettage (50, 50') peut être déplacé le long d'un axe de déplacement (V) qui est orthogonal á l'axe de canal (K) indépendamment d'un ajustement le long de l'axe de canal (K) et indépendamment de l'autre canal de pipettage (50, 50'), l'entraînement de déplacement comprenant un moteur linéaire, le stator de ce dernier comprenant au moins deux arrangements d'aimants (32, 42) comprenant des aimants (36) qui se succèdent en série sur un support d'aimants (34, 44) le long de l'axe de déplacement (V), disposés de façon différente quant à leur polarité (P1, P2), le chariot du moteur (à 38, à 38') comprenant au moins un arrangement de boucles conductrices (38) comprenant au moins un groupe de trois boucles conductrices (72, 74, 76) disposées successivement le long de l'axe de déplacement (V), chacune d'elles étant associable ou associée à une autre phase d'une alimentation triphasée, chaque canal de pipettage (50, 50') comprenant au moins un arrangement de boucles conductrices (38, 38'), les chariots (à 38, à 38') de deux canaux de pipettage (50, 50') directement adjacents le long de l'axe de déplacement (V) étant associés à des arrangements d'aimants (32, 42) différents et coopérants avec ces derniers.

2. Dispositif pour pipettes selon la revendication 1,
**caractérisé en ce qu'**il comprend un nombre k d'arrangements d'aimants (32, 42), avec k étant égal ou supérieur à 2, et un nombre n de canaux de pipettage (50, 50'), avec n étant égal ou supérieur à k, étant entendu que pour chaque groupe de k canaux de pipettage (50, 50') disposés successivement directement le long de l'axe de déplacement (V) chaque chariot de ce groupe est associé à un autre arrangement de boucles conductrices (38, 38') et coopère avec ce dernier.

3. Dispositif pour pipettes selon les revendications 1 ou 2,
**caractérisé en ce que** le dispositif (10) comprend quatre arrangements d'aimants (32, 32) et au moins quatre canaux de pipettage (50, 50') déplaçables le long de l'axe de déplacement (V) avec un chariot (à 38, à 38') chacun, chaque chariot (à 38, à 38') d'un groupe de quatre canaux de pipettage (50, 50') disposés successivement directement le long de l'axe de déplacement (V) étant associé à un autre arrangements d'aimants (32, 42) et coopérant avec ce dernier.

4. Dispositif pour pipettes selon une des revendications précédentes,
**caractérisé par** les axes des canaux de pipettage (K) des canaux de pipettage (50, 50') se trouvant dans un plan commun dans la direction de l'axe de déplacement (V).

5. Dispositif pour pipettes selon une des revendications précédentes,
**caractérisé en ce qu'**il comprend au moins deux rails de guidage linéaire (20, 24), les canaux de pipettage (50, 50') dont les chariots sont associés au même arrangement d'aimants (32, 42) étant guidés sur le même rail de guidage linéaire (20 ou 24) le long de l'axe de déplacement (V).

6. Dispositif pour pipettes selon la revendication 5,
**caractérisé en ce qu'**il comprend tant de rails de guidage linéaire (20, 24) que d'arrangements d'aimants (32, 42).

7. Dispositif pour pipettes selon une des revendications précédentes,
**caractérisé par** le dispositif comprenant un ou deux profilés porteurs (22) orientés le long de l'axe de déplacement (V), chaque profilé porteur (22) portant deux arrangements d'aimants (32, 42) et deux rails de guidage linéaire (20, 24).

8. Dispositif pour pipettes selon la revendication 7,
**caractérisé par** chaque profilé porteur (22) étant formé de manière essentiellement symétrique par rapport à un plan de symétrie (AS) le long de l'axe de déplacement (V).

9. Dispositif pour pipettes selon la revendication 7 ou 8,
**caractérisé en ce qu'**il comprend exactement deux profilés porteur (22) qui sont formés de manière essentiellement symétrique par rapport à un plan de symétrie (E) s'étendant le long de l'axe de déplacement (V) et entre les profilés porteur (22), le plan de symétrie (E) situé entre les profilés porteur (22) comprenant de préférence les axes de canal (K).

10. Dispositif pour pipettes selon une des revendications précédentes,
**caractérisé par** un arrangement d'aimants (32, 42) étant prévu seulement sur un côté de l'arrangement de boucles conductrices (38, 38').

11. Dispositif pour pipettes selon une des revendications précédentes,
**caractérisé par** l'arrangement de boucles conductrices (38, 38') comprenant exactement un groupe de trois boucles conductrices (72, 74, 76) disposées successivement le long de l'axe de déplacement (V).

12. Dispositif pour pipettes selon une des revendications précédentes,
**caractérisé par** l'arrangement de boucles conductrices (38, 38') comprenant un circuit imprimé (70) prévoyant un évidement (78) pour toutes les boucles conductrices (72, 74, 76), dans lequel les boucles conductrices sont au moins partiellement reçues.

13. Dispositif pour pipettes selon une des revendications précédentes,
**caractérisé par** les boucles conductrices (72, 74, 76) d'un groupe se succédant sans chevauchement le long de l'axe de déplacement (V).

14. Dispositif pour pipettes selon une des revendications précédentes,
**caractérisé par** les aimants (36, 46) d'un arrangement d'aimants (32, 42) étant orientés de sorte que leur direction de polarisation (P1, P2) est perpendiculaire à un plan formé par l'axe de canal (K) et l'axe de déplacement.
